(19) **Europäisches Patentamt**
**European Patent Office**
**Office européen des brevets**

(11) **EP 2 268 106 B1**

(12) **EUROPEAN PATENT SPECIFICATION**

(45) Date of publication and mention
of the grant of the patent:
**08.08.2018 Bulletin 2018/32**

(51) Int Cl.:
**H05B 37/02** (2006.01)   **F21V 21/04** (2006.01)

(21) Application number: **10165873.0**

(22) Date of filing: **14.06.2010**

(54) **Illumination device**

Beleuchtungsvorrichtung

Dispositif d'éclairage

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.06.2009 JP 2009151634**

(43) Date of publication of application:
**29.12.2010 Bulletin 2010/52**

(73) Proprietor: **Panasonic Intellectual Property
Management Co., Ltd.**
**Osaka-shi, Osaka 540-6207 (JP)**

(72) Inventors:
• **Ootubo, Atusi**
 **Tsubame, Niigata Niigata (JP)**

• **Kouno, Tadahiro**
 **Tsubame, Niigata Niigata (JP)**
• **Nagaoka, Shinichi**
 **Tsubame, Niigata Niigata (JP)**
• **Ichioka, Tatsuru**
 **Yawata, Kyoto Kyoto (JP)**

(74) Representative: **Rüger, Barthelt & Abel
Patentanwälte
Webergasse 3
73728 Esslingen (DE)**

(56) References cited:
**WO-A1-2005/018286     JP-A- 2001 325 810
US-A1- 2003 117 803     US-A1- 2006 181 416**

**Description**

[Field of the Invention]

The present invention relates to an illumination device including a light-emitting part and a human body sensor part detecting whether or not a person is present.

[Background Art]

There is conventionally provided an illumination device including a human body sensor part that outputs a human body detection signal upon detecting that a person is present in a detection area, and a control part that lighting a light-emitting part constituted by a lamp or the like based on the human body detection signal outputted from the human body sensor part. In this case, the human body sensor part generally includes a pyroelectric sensor element capable of detecting a heat ray emitted from a human body generally.

Meanwhile, if the human body sensor part of the illumination device of this type does not detect a heat ray emitted from the human body of a person present in the detection area and the light-emitting part is lighted off, the illumination device often detects a change of the heat ray emitted from the light-emitting part and outputs the human body detection signal despite absence of a person in the detection area. If this happens, the illumination device possibly and disadvantageously repeatedly lights the light-emitting part based on the erroneously outputted human body detection signal.

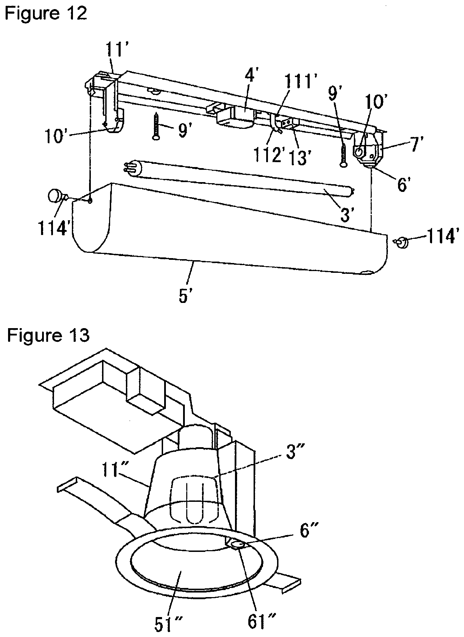

Considering this problem, there is proposed an illumination device (see Patent Document 1) configured as follows. As shown in, for example, Fig. 12, the illumination device is disposed in a portion away upward from a floor surface (not shown), and includes a longitudinal device main body 11', a light-emitting part 3' constituted by a straight tube fluorescent lamp attached to between a pair of sockets 10' provided away from each other in a longitudinal direction of the device main body 11', and a human body sensor part 6' outputting the human body detection signal when detecting presence of a person in the detection area. The human body sensor part 6' is provided on one end (a right end in Fig. 12) of the device main body 11' on an opposite side of one of the paired sockets 10' to a light-emitting part 3'-side thereof in such a fashion that the human body sensor part 6' is supported by a sensor support base 7'. It is to be noted that the device main body 11' is attached to a ceiling material by wooden screws 9', and has a lighting device 4' provided in a central portion of the device main body 11' in the longitudinal direction. Furthermore, a power supply line lead-in hole 111' is formed in the device main body 11', and a power supply line 112' inserted into the power supply line lead-in hole 111' is connected to a terminal base 13' for electrically connecting the lighting device 4' provided on the device main body 11' to the power supply line 112'. Moreover, a translucent cover 5' is attached to the device main body 11' by screws 114' in such a fashion to cover up the light-emitting part 3'.

In the illumination device configured as shown in Fig. 12, the human body sensor 6' is arranged on one end of the socket 10' in the longitudinal direction of the device main body 11' opposite to the light-emitting part 3'-side of the socket 10'. This makes it difficult to influence the heat ray emitted from the light-emitting part 3' on the human body sensor part 6'. In addition, this suppresses the pyroelectric sensor element of the human body sensor part 6' from detecting a change of the heat ray emitted from the light-emitting part 3' and erroneously outputting the human body detection signal when the light-emitting part 3' is lighted off.

Furthermore, there is conventionally proposed an illumination device (see Patent Document 2) configured as follows. As shown in Fig. 13, the illumination device is disposed in a portion away from a floor surface (not shown), and includes a device main body 11" formed into a bottomed cylindrical shape and accommodating therein a light-emitting part 3" constituted by an incandescent lamp, a reflector plate 51" reflecting light from the light-emitting part 3" toward an opening of the device main body 11" in such a fashion as to surround the light-emitting part 3" inside the device main body 11". A protruding part 61" protruding from an inner circumferential portion of the opening of the device main body 11" into the opening is provided. The human body sensor part 6" is attached to the protruding part 61" in such a fashion as to be directed outward of the opening.

In the illumination device configured as shown in Fig. 13, the human body sensor part 6" is provided on the protruding part 61" protruding from an inner circumferential portion of the opening of the device main body 11" into the opening. This can make the human body sensor part 6" apparently inconspicuous. Moreover, similarly to an ordinary downlight, the illumination device configured as shown in Fig. 13 can be attached into attachment holes (not shown) penetrating a ceiling material (not shown), and can be installed by the same installation method as that for the downlight. US 2003/0117803 A1 shows a LED lamp with a plurality of LEDs and a human body sensor arranged in the center of the plurality of LEDs and in direct contact with at least some of the adjacent LEDs.

A similar lamp is also disclosed in US 2006/0181416 A1. The human body sensor is arranged in the center of a plurality of LEDs and extents above the top of the LEDs in axial direction of the lamp

[Conventional Technique Documents]

[Patent Documents]

[Patent Document 1] Japanese Unexamined Patent Publication No. 2005-2335398
[Patent Document 2] Japanese Unexamined Patent Publication No. 2002-157916

[Disclosure of the Invention]

[Problems to be solved by the Invention]

However, the illumination devices configured as shown in Figs. 12 and 13 have the following problems. The human body sensor 6' or 6" is arranged at a position away from a center of the light-emitting part 3' or 3". Due to this, on the floor surface, a center of the detection area of the human body sensor part 6' or 6" is asymmetric to a center of a light distribution area where light the intensity of radiation of which is equal to or higher than half a maximum intensity of radiation among the light emitted from the light-emitting part 3' or 3". Accordingly, in the illumination device configured as shown in Fig. 12 or 13, if a width of the light distribution area on the floor surface of the light-emitting part 3' or 3" is almost equal to that of the detection area on the floor surface of the human body detection sensor part 6' or 6", then a region that does not overlap with the detection area is generated in the light distribution area, and the light-emitting part 3' or 3" is not lighted despite presence of a person in the light distribution area. Further, even if a person enters the light distribution area, the light-emitting part 3' or 3" is not lighted or it takes a longer time since the person enters the light distribution area until the light-emitting part 3' or 3" is lighted. That is, with the illumination device configured as shown in Fig. 12 or 13, it is difficult to secure an appropriate detection area that can suppress large delay of time since a person enters the light distribution area until the light-emitting part 3' or 3" is lighted without lighting off the light-emitting part 3' or 3" despite presence of a person in the light distribution area.

Moreover, in the illumination device configured as shown in Fig. 12 or 13, if a person enters the region that is present in the light distribution area and that does not overlap with the detection area of the human body sensor part 6' or 6", then the human body sensor part 6' or 6" cannot detect the person, and the light-emitting part 3' or 3" is often lighted off before a person expects. In case of the illumination device configured as shown in Fig. 12 or 13, if the light distribution area is wider than the detection area and a plurality of illumination devices is arranged only considering the light distribution area of each illumination device, the human body sensor part 6' or 6" does not detect a person despite presence of the person on an end of the light distribution area to floor surfaces of the two illumination devices attached so that ceiling surfaces thereof are adjacent to each other.

Further, in the illumination device configured as shown in Fig. 12 or 13, if the width of the light distribution area on the floor surface is almost equal to that of the detection area on the floor surface, it may be considered to make fine adjustment of an inclination of the pyroelectric sensor element with respect to a floor surface of a light-receiving surface so that the light distribution area almost overlaps with the detection area. However, it is difficult to finely adjust the inclination of the pyroelectric sensor element with respect to the floor surface of the light-receiving surface. Besides, workability possibly deteriorates.

In the illumination device configured as shown in Fig. 12, it is necessary to provide the sensor support base 7' structured to support the human body sensor part 6' in the portion away from the light-emitting part 3' in the device main body 11' so as to suppress influence of the heat ray emitted from the light-emitting part 3' on the human body sensor part 6'. In addition, this probably causes cost increase.

The present invention has been achieved in light of the above-stated respects. It is an object of the present invention to provide an illumination device that can make it difficult to exert an influence of a heat ray emitted from a light-emitting part on a human body sensor part, that can secure a detection area of the human body sensor part appropriate for a light distribution area where light from the light-emitting part is distributed, that can ensure high workability, and that can suppress cost increase.

[Means adapted to solve the Problems]

The problem is solved by means of an illumination device according to claim 1.
According to a first aspect of the present invention, an illumination device includes: a human body sensor part outputting a human body detection signal if a sensor element detecting a heat ray emitted from a human body detects a change of the heat ray; a plurality of light-emitting parts each including a plurality of solid-state light-emitting elements; a control part lighting the solid-state light-emitting elements of all the light-emitting parts based on the human body detection signal outputted from the human body sensor part; a circuit substrate, the human body sensor part and the light-emitting parts being mounted on the circuit substrate; and a device main body supporting the circuit substrate so as to be able to make the heat ray incident on the human body sensor part mounted on the circuit substrate and to be able to emit light emitted from the light-emitting parts, wherein: a detection angle is set to be greater than a half angle so that a detection area of the human body sensor part on a floor surface includes entirety of a light distribution area on the floor surface, the detection angle being an angle formed between a normal of a plane passing through a center of a light-receiving surface of the sensor element of the human body sensor part and including one surface of the circuit substrate and a first straight line connecting the center of the light-receiving surface of the sensor element of the human body sensor part to an outer circumference of the detection area on the floor surface, the half angle being an angle formed between an optical axis of the light-emitting part arranged at a farthest position from the human body sensor part and a second straight line extending in a radiation direction of light emitted from the light-emitting part and having a radiation intensity as half as a maximum value of the radiation intensity and indicating a directivity characteristic of the light-emitting part, light being distributed to the light distribution area on the floor surface, the light distributed to the light distribution area on the floor surface being emitted from each of the light-emitting parts and having a radiation intensity equal to or higher than half of a maximum value of the radiation intensity.

According to this invention, the detection area of the human body sensor part on the floor surface is set so as to include entirety of the light distribution area on the floor surface to which area the light emitted from the light-emitting parts and having the radiation intensity that is equal to or higher than the maximum radiation intensity, and so that the detection angle that is the angle formed between the normal of the plane passing through the center of the light-receiving surface of the sensor element included in the human body sensor part and including one surface of the circuit substrate and the first straight line connecting the center of the light-receiving surface of the sensor element to the outer circumference of the detection area of the human body sensor part on the floor surface is set to be greater than the half angle that is the angle formed between the optical axis of each light-emitting part and the second straight line extending in the radiation direction of light having the radiation intensity that is half of the maximum radiation intensity among the light emitted from the light-emitting parts and that indicates a directivity characteristic of each light-emitting part. Each light-emitting part is constituted by solid-state light-emitting elements smaller in heat value than a fluorescent lamp or the like. Due to this, the heat ray emitted from the light-emitting parts has less influence on output of the human body detection signal from the human body sensor part, and it is possible to prevent the human body sensor part from detecting the change of the heat ray emitted from the light-emitting parts and erroneously outputting the human body detection signal. Furthermore, since the detection angle is set to be greater than the half angle so that the detection area includes entirety of the detection area, there is no region in the light distribution area which region overlapping with the detection area of the human body sensor part on the floor surface and the detection area is wider than the light distribution area. Therefore, the light-emitting parts are not lighted off while a person is present in the light distribution area and it is possible to secure the appropriate detection area for which time since entry of the person in the light distribution area until lighting-off of the light-emitting parts is short. Moreover, since the detection angle is set to be greater than the half angle so that the detection area includes entirety of the detection area, there is no need to make a fine adjustment of the inclination of the sensor element of the human body sensor part with respect to the floor surface of the light-receiving surface so as not to generate the region overlapping with the detection area in the light distribution area, thereby advantageously ensuring high workability. Furthermore, it suffices that the device main body is structured to be able to support the circuit substrate on which the human body sensor part and the light-emitting part are mounted. Therefore, there is no need to separately provide a complicated structure for holding the light-emitting parts and that for holding the human body sensor part on the device main body. This can simplify a structure of the device main body and suppress cost increase.

According to a second aspect of the present invention, in the first aspect of the present invention, the human body sensor part and the plurality of light-emitting parts are arranged to be identical in a height from the floor surface, and the human body sensor part and the plurality of light-emitting parts are arranged so as to satisfy a relational expression of $W<H\times[\tan\alpha-\tan\beta]$ for a center-to-center distance, the center-to-center distance being W, the height of the human body sensor part from the floor surface being H, the detection angle being $\alpha$, and the half angle being $\beta$, the center-to-center distance being a distance between a center of the light-receiving surface of the sensor element of the human body sensor part and the optical axis in a direction orthogonal to the optical axis of one of the light-emitting parts arranged at a farthest position from the human body sensor part.

According to this invention, the human body sensor part is arranged at the position away from the floor surface. In addition, the human body sensor part and the light-emitting parts are arranged so as to satisfy the above-stated relational expression for the center-to-center distance that is the distance between the center of the light-receiving surface of the sensor element of the human body sensor part and the optical axis in the direction orthogonal to the optical axis of one of the light-emitting parts arranged at the farthest position from the human body sensor part, among the center-to-center distance, the height of the human body sensor part from the floor surface, the detection angle, and the half angle. This facilitates setting the center-to-center distance that is the distance between the center of the light-receiving surface of the sensor element of the human body sensor part and the optical axis in the direction orthogonal to the optical axis of the light-emitting part arranged at the farthest position from the human body sensor part, and facilitates manufacturing accordingly. Moreover, the human body sensor part and the light-emitting parts are arranged so that the height of the human body sensor part from the floor surface is equal to the height of each of the plurality of light-emitting parts from the floor surface. Due to this, as compared with an instance in which the height of the human body sensor part from the floor surface differs from that of each light-emitting part from the floor surface, the detection area and the light distribution area can be designed easily.

According to a third aspect of the present invention, in the first or second aspect of the present invention, the plurality of light-emitting parts are arranged to surround a periphery of the human body sensor part.

According to this invention, the plurality of light-emitting parts is arranged to surround the human body sensor part, whereby the light distribution area is almost symmetric to the normal of the plane passing through the center of the light-receiving surface of the sensor element of the human body sensor part and including one surface of the circuit substrate. It is, therefore, possible to set the same timing of lighting the light-emitting parts irrespectively of an entry direction of a person in the light distribution area.

[Effect of the Invention]

According to the first aspect of the present invention, each light-emitting part is constituted by solid-state light-emitting elements smaller in heat value than a fluorescent lamp or the like. Due to this, the heat ray emitted from the light-emitting parts has less influence on output of the human body detection signal from the human body sensor part, and it is possible to prevent the human body sensor part from detecting the change of the heat ray emitted from the light-emitting parts and erroneously outputting the human body detection signal. Furthermore, since the detection angle is set to be greater than the half angle so that the detection area includes entirety of the detection area, there is no region overlapping with the detection area of the human body sensor part on the floor surface in the light distribution area on the floor surface and the detection area is wider than the light distribution area. Therefore, the light-emitting parts are not lighted off while a person is present in the light distribution area and it is possible to secure the appropriate detection area for which time since entry of the person in the light distribution area until lighting-on of the light-emitting parts is short. Moreover, there is no region overlapping with the detection area of the human body sensor part on the floor surface in the light distribution area on the floor surface, and the detection area is wider than the light distribution area. Due to this, there is no need to make a fine adjustment of inclination of the sensor element of the human body sensor part, thereby advantageously ensuring high workability. Furthermore, there is no need to separately provide a complicated structure for holding the light-emitting parts and that for holding the human body sensor part on the device main body. This can simplify a structure of the device main body and suppress cost increase.

[Brief Description of the Drawings]

[Fig. 1] Figs. 1(a) and 1(b) show an illumination device according to a first embodiment, wherein (a) is a bottom view of principal parts and (b) is a side view of a part of the principal parts of the illumination device.

[Fig. 2] Fig. 2 is a partially cutaway side view in a state in which the illumination device according to the first embodiment is provided on a ceiling material.

[Fig. 3] Fig. 3 is a schematic perspective view in a state in which a reflector member and a cover of the illumination device according to the first embodiment are detached.

[Fig. 4] Fig. 4 is a circuit block diagram of the illumination device according to the first embodiment.

[Fig. 5] Fig. 5 is an operation explanatory diagram of the illumination device according to the first embodiment.

[Fig. 6] Fig. 6 is an operation explanatory diagram of the illumination device according to the first embodiment.

[Fig. 7] Figs. 7(a) and 7(b) show an illumination device according to a second embodiment, wherein (a) is a schematic side view of principal parts and (b) is a schematic bottom view of the principal parts of the illumination device according to the second embodiment.

[Fig. 8] Fig. 8 is a partially cutaway side view in a state in which the illumination device according to the second embodiment is provided on a ceiling material.

[Fig. 9] Fig. 9 is an operation explanatory diagram of the illumination device according to the second embodiment.

[Fig. 10] Fig. 10 is a schematic bottom view of principal parts of an illumination device according to a third embodiment.

[Fig. 11] Fig. 11 is a partially cutaway side view in a state in which the illumination device according to the third embodiment is provided on a ceiling material.

[Fig. 12] Fig. 12 is an exploded perspective view of an illumination device according to one conventional technique.

[Fig. 13] Fig. 13 is a schematic perspective view of an illumination device according to another conventional technique.

[Best Mode for Carrying Out the Invention]

(First Embodiment)

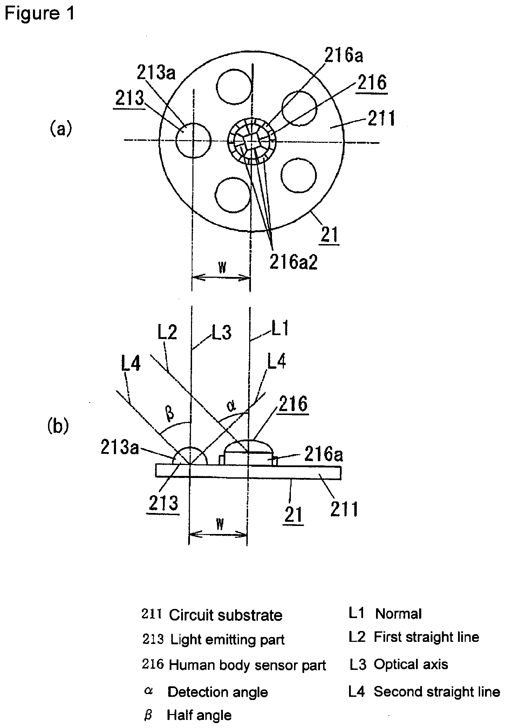

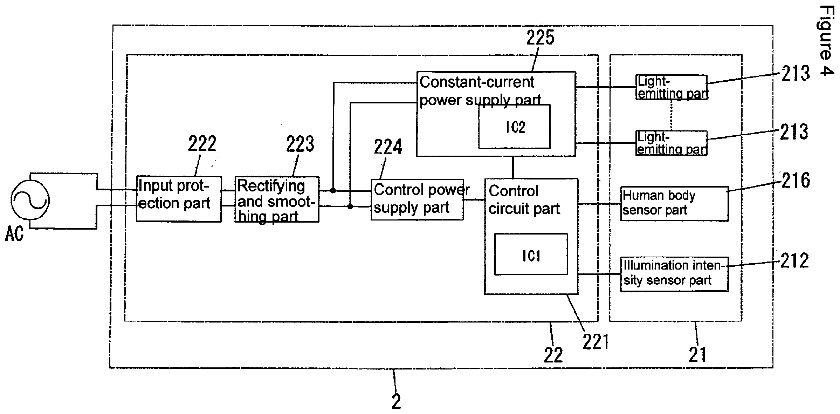

As shown in Figs. 1 to 3, an illumination device 2 according to the present embodiment is a ceiling-recessed downlight attached to a ceiling material C of an office, a house or the like. The illumination device 2 includes a plurality of (five in Figs. 1 to 3) light-emitting parts 213 each including LEDs (not shown) that are a plurality of solid-state light-emitting elements, a human body sensor part 216 that outputs a human body detection signal if a pyroelectric sensor element, to be described later, which is a sensor element detecting a heat ray emitted from a human body detects a change of the heat ray, an illumination intensity sensor part 212 (see Fig. 4) for detecting ambient brightness of the illumination device 2, a control part 22 (see Fig. 4) driving the human body sensor part 216 and the illumination intensity sensor part 212 and lighting the plurality of LEDs included in the light-emitting parts 213 based on the human body detection signal outputted from the human body sensor part 216, and a plate-like circuit substrate 211 having one surface on which the human body sensor part 216 and the light-emitting parts 213 are mounted and having a generally circular shape in a plan view. The light-emitting parts 213 are arranged around the human body sensor part 216. The human body sensor part 216, the illumination intensity sensor part 212, the light-emitting parts 213, and the circuit substrate 211 constitute an LED unit 21.

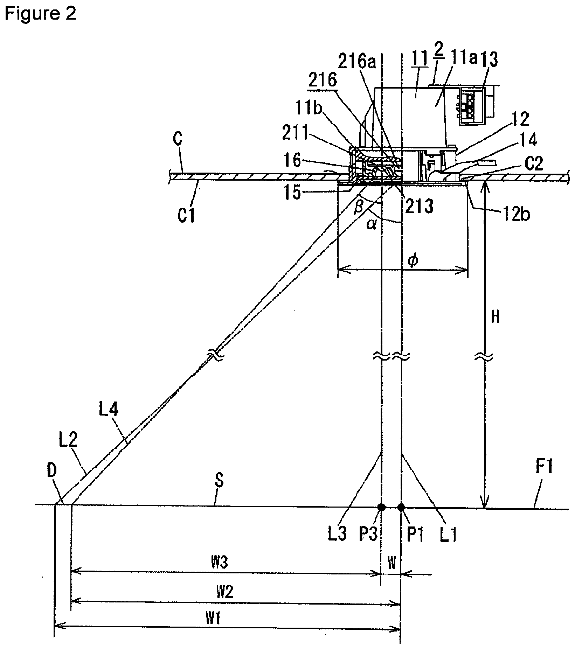

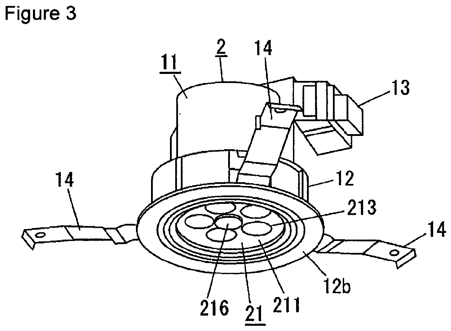

As shown in Figs. 2 and 3, the illumination device 2 according to the present embodiment also includes a device main body 11 formed out of metal (for example, metal having high thermal conductivity such as Al or Cu) and accommodating therein the LED unit 21 and the control part 22, a cylindrical attachment frame 12 that includes an outer flange part 12b formed out of a cylindrical member and extending outward from an entire outer circumference of a lower end of the cylindrical member, and that is attached to the device main body 11 by attachment screws (not shown), a terminal base 13 provided on an upper end of an outer side of the device main body 11 for feeding power to the control part 22 accommodated in the device main body 11, and three attachment springs 14 provided outside of the attachment frame 12 for attaching the device main body 11 and the attachment frame 12 to a ceiling material C that is a building material. An attachment hole C2, which is circular in a plan view, penetrates the ceiling material C. The attachment frame 12 is arranged inside the attachment hole C2 in such a fashion as to abut an upper surface of the outer flange 12b on a circumference of the attachment hole C2 on a ceiling surface C1 of the ceiling material C, and a plurality of attachment springs 14 elastically contacts with an upper surface of the circumference of the attachment hole C2 on the ceiling material C. The attachment frame 12 and the device main body 11 are thereby fixed to the ceiling material C.

The device main body 11 includes a first accommodation part 11a formed into a bottomed cylindrical shape and accommodating therein the control part 22, and a support substrate 11b constituted by a metal plate, formed into a shape fitted in the attachment frame 12, fixedly attached to a lower end of the first accommodation part 11a, and having the LED unit 21 attached thereto by attachment screws or the like. Penetrating holes into which an electric cable (not shown) for applying current from the control part 22 to the light-emitting parts 21 of the LED unit 21, a first signal line (not shown) for transmitting the human body detection signal outputted from the human body sensor part 216 of the LED unit 21, and a second signal line (not shown) for transmitting an output signal outputted from the illumination intensity sensor part 212 of the LED unit 21 are provided in the support substrate 11b. A disk-like cover 15 formed out of a translucent material is attached to the device main body 11 so as to cover up the LED unit 21. As shown in Fig. 2, a reflector member 16 reflecting light emitted from the light-emitting parts 213 is provided between the cover 15 and the circuit substrate 211 in the device main body 11 so as to surround peripheries of the respective light-emitting parts 213. Thus, the device main body 11 supports the circuit substrate 211 so that the heat ray can be incident on the human body sensor part 216 mounted on one surface of the circuit substrate 211 and so that the light emitted from the light-emitting parts 213 can be emitted.

As shown in Fig. 1(b), the human body sensor part 216 includes a lens 216a formed out of polyethylene resin and having an outer circumference formed into a generally semispherical shape. Inside the lens 216a, the pyroelectric sensor element (not shown) that is the sensor element detecting the heat ray emitted from the human body is provided. The human body sensor part 216 employs, as the pyroelectric sensor element, a quad-type pyroelectric sensor element configured so that four sensor elements are arranged at positions of vertexes of a square, respectively, and so as to be able to detect a fine movement of a person in the detection area. In this case, the lens 216a is constituted by an assembly of many small lenses 216a2 constituted by Fresnel lenses. The human body sensor part 216 detects the heat ray emitted from the human body, generates the human body detection signal, and outputs the human body detection signal to a control circuit part 221 to be described later if a person enters a detection area of the human body sensor part 216.

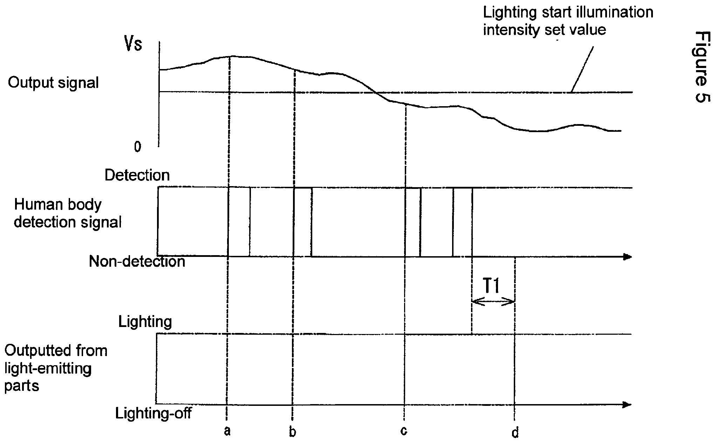

The illumination intensity sensor part 212 is configured to include a photodiode, and a photo IC diode (not shown) that is a module with which an amplifier amplifying a signal from the photodiode or the like is provided to be integrally provided, and is provided inside the lens 216a. The illumination intensity sensor part 212 generates an output signal Vs (see Fig. 5) having a magnitude proportional to an ambient illumination intensity of the illumination device 2, and outputs the output signal Vs to the control circuit part 221.

Each of the light-emitting parts 213 includes a plurality of serial circuits formed by connecting a plurality of LEDs stated above in series, and the serial circuits are connected in parallel. The LEDs are accommodated in a package 213a with which a lens having a generally semispherical surface is integrally formed and which is circular in a plan view.

As shown in Fig. 1, the human body sensor part 216 is provided in an almost central portion on one surface of the circuit substrate 211. The five light-emitting parts 213 are arranged to surround the human body sensor part 216. In an example shown in Fig. 1, the five light-emitting parts 213 are arranged so as to be equidistant in a circumferential direction of the human body sensor part 216, and so that a distance between a center of a light-receiving surface of the pyroelectric sensor element of the human body sensor part 216 in a direction orthogonal to an optical axis (for example, L3 in Fig. 1(b)) of each light-emitting part 213 and the optical axis of each light-emitting part 213 is equally a predetermined distance (for example, 20 mm). In the illumination device according to the present embodiment, a configuration of the LED unit 21 is not limited to the above-stated configuration. For example, a plurality of penetrating holes (not shown) into which the packages 213a of a plurality of light-emitting parts 213 can be inserted, respectively can be provided to penetrate the circuit substrate 211. In addition, the LED unit 21 can be configured so that a plurality of light-emitting parts 213 is inserted into the penetrating holes, respectively from the other surface of the circuit substrate 211. Alternatively, a penetrating hole (not shown) into which the lens 216a of the human body sensor 216 can be inserted can be provided to penetrate the circuit substrate 211. In addition, the LED unit 21 can be configured so that the human body sensor 216 is inserted into the penetrating hole from the other surface of the circuit substrate 211. In another alternative, the penetrating holes into which the lens 216a of the human body sensor 216 and the packages 213a of a plurality of light-emitting parts 213 can be inserted, respectively can be provided to penetrate the circuit substrate 211. In addition, the LED unit 21 can be configured so that the human body sensor part 216 and the light-emitting parts 213 are all inserted into the penetrating holes from the other surface of the circuit substrate 211.

As shown in Fig 4, the control part 22 includes the control circuit part 221 electrically connected to the human body sensor part 216 and the illumination intensity sensor part 212 via the first and second signal lines, respectively, a control power supply part 224 for supplying power to the control circuit part 221, a constant-current power supply part 225 outputting DC current to the light-emitting parts 213 via the electric cable, a rectifying and smoothing part 223 rectifying and smoothing AC power supplied from an AC power supply AC and supplying DC power to the control power supply part 224 and the constant-current power supply part 223, and an input protection part 222 interposed between the AC power supply AC and the rectifying and smoothing part 223 and preventing overcurrent from being applied from the AC power supply AC to the rectifying and smoothing part 223.

The control circuit part 221 includes a microcomputer (hereinafter, "sensor control microcomputer") IC1 outputting a lighting-off control signal or a lighting control signal based on the human body detection signal outputted from the human body sensor part 216 and the output signal Vs from the illumination intensity sensor part 212.

The control power supply part 224 is constituted by a step-down chopper circuit configured to include a serial circuit including a first switching element (not shown) connected to between output ends of the rectifying and smoothing part 223 and a first fast diode (not shown) corresponding to a high switching frequency of a few kHz to several tens of kHz, a serial circuit including an inductor (not shown) connected to between both ends of the first fast diode and a smoothing capacitor (not shown), and a switching power-supply IC (not shown) connected to the first switching element and controlling an ON time and an OFF time of the first switching element. The control circuit part 221 is connected between both ends of the smoothing capacitor constituting a part of the control power supply part 224, and a DC voltage is outputted from the control power supply part 224 to the control circuit part 221.

The constant-current power supply part 225 is constituted by a step-down chopper circuit configured to include a serial circuit including a second switching element (not shown) connected to between output ends of the rectifying and smoothing part 223 and a second fast diode (not shown), a serial circuit including an inductor (not shown) that is a choke coil connected to between both ends of the second fast diode and a smoothing capacitor (not shown), and a microcomputer (hereinafter, "controller microcomputer") IC2 constituting a controller connected to the second switching element and controlling an ON time and an OFF time of the second switching element. The serial circuit of the plurality of LEDs constituting each of the light-emitting parts 213 is connected to between both ends of the smoothing capacitor constituting a part of the constant-current power supply part 225, and the constant-current power supply part 225 outputs a constant DC current to the serial circuit of the plurality of LEDs.

The rectifying and smoothing part 223 is configured to include a diode bridge (not shown) rectifying full waves of an AC current supplied from the AC power supply AC, and a smoothing capacitor (not shown) connected to between output ends of the diode bridge and constituted by an aluminum electrolytic capacitor for smoothing a pulsating flow outputted from the diode bridge.

The input protection part 222 is configured to include a serial circuit interposed between the AC power supply and the rectifying and smoothing circuit 223 and including a current fuse (not shown) connected to between the output ends of the AC power supply AC and a film capacitor (not shown), and a noise protection film circuit (not shown) including a capacitor (not shown) connected to between both ends of the film capacitor.

Operation performed by the illumination device 2 according to the present embodiment will next be described based on Fig. 5.

If a person enters the detection area of the human body sensor part 216, the human body sensor part 216 detects the heat ray emitted from the human body of the person in the detection area, and outputs the human body detection signal to the sensor control microcomputer IC1 of the control circuit part 221. The sensor control microcomputer IC1 of the control circuit part 221 receives the human body detection signal outputted from the human body sensor part 216. Further, the sensor control microcomputer IC1 continuously receives the output signal Vs from the illumination intensity sensor part 212, and compares a magnitude of the output signal Vs from the illumination intensity sensor part 212 with a preset lighting start illumination intensity set value (for example, 50 luxes). If the magnitude of the output signal Vs from the illumination intensity sensor part 212 is greater than the preset lighting start illumination intensity set value (points a and b in Fig. 5), the sensor control microcomputer IC1 outputs a lighting-off control signal (Hi output signal) for instructing the controller microcomputer IC2 included in the constant-current power supply part 225 to light off the light-emitting parts 213 to the controller microcomputer IC2. Upon receiving the lighting-off control signal outputted from the sensor control microcomputer IC1, the controller microcomputer IC2 controls the constant-current power supply part 225 to cut off supply of current from the constant-current power supply part 225 to the light-emitting parts 213 so as not to light the plurality of LEDs included in the light-emitting parts 213. At this time, in the constant-current power supply part, an oscillator circuit (not shown) included in the constant-current power supply part 225 stops oscillating.

On the other hand, if the magnitude of the output signal Vs from the illumination intensity sensor part 212 is smaller than the lighting start illumination intensity set value (point c in Fig. 5) when the sensor control microcomputer IC1 receives the human body detection signal outputted from the human body sensor part 216, the sensor control microcomputer IC1 outputs a lighting control signal for instructing the controller microcomputer IC2 to light the light-emitting parts 213 to the controller microcomputer IC2. Upon receiving the lighting control signal outputted from the sensor control microcomputer IC1, the controller microcomputer IC2 controls the constant-current power supply part 225 to start supplying current from the constant-current power supply part 225 to the light-emitting parts 213 so as to light the plurality of LEDs included in the light-emitting parts 213.

Thereafter, if the human body sensor part 216 does not detect the heat ray emitted from the human body of the person in the detection area any longer, the human body sensor part 216 stops outputting the human body detection signal to the control circuit part 221. At this time, the sensor control microcomputer IC1 outputs the lighting-off control signal to the controller microcomputer IC2 after passage (point d in Fig. 5) of predetermined lighting holding time T1 (for example, one minute) since the human body detection signal is not input to the control circuit part 221. Upon receiving the lighting-off control signal outputted from the sensor control microcomputer IC1, the controller microcomputer IC2 controls the constant-current power supply part 225 to cut off supply of current from the constant-current power supply part 225 to the light-emitting parts 213 so as to light off the plurality of LEDs included in the light-emitting parts 213.

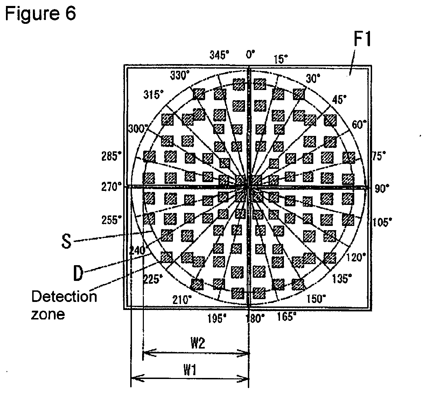

Moreover, as shown in Fig. 2, the five light-emitting parts 213 are arranged to be away from the human body sensor part 216. Further, a detection angle $\alpha$ that is an angle formed between a normal line L1 of a plane passing through a center of a light-receiving surface of the pyroelectric sensor element included in the human body sensor part 216 and including one surface of the circuit substrate 211 and a first straight line L2 connecting the center of the light-receiving surface of the pyroelectric element to an outer circumference of the detection area of the human body sensor part 216 on a floor surface F1 is set to be greater than a half angle $\beta$ that is an angle formed between an optical axis L3 of each light-emitting part 213 and a second straight line L4 extending in a radiation direction of light emitted from the light-emitting part 213 and having a radiation intensity that is half a maximum radiation intensity so that the detection area D (see Fig. 6) of the human body sensor part 216 on the floor surface F1 includes entirety of a light distribution area S (see Fig. 6) on the floor surface F1 to which area light having a radiation intensity that is equal to or higher than half the maximum radiation intensity of the light emitted from each light-emitting part 213. Moreover, in the illumination device 2 according to the present embodiment, the reflector member 16 is provided around the light-emitting parts 213 and the cover 15 is provided below the light-emitting parts 213. Due to this, the half angle $\beta$ is set to an angle in light of influence of refraction generated when the light emitted from the light-emitting part 213 is reflected by the reflector member 16 and transmitted by the cover 15. The detection angle $\alpha$ is hardly influenced by the cover 15 provided below the light-emitting parts 216. While the illumination device 2 configured as shown in Fig. 2 includes the reflector member 16 and the cover 15, these elements are not always provided but may be appropriately provided.

Meanwhile, a distance from an intersection P1 between the normal line L1 and the floor surface F1 to the outer circumference of the detection area D on the floor surface F1 of the human body sensor part 216 satisfies a relationship represented by the following Expression (1) with respect to the detection angle $\alpha$ that is the angle formed between the normal line L1 and the first straight line 12. It is assumed that the distance is W1, a height of the human body sensor part 216 from the floor surface F1, a height of the light-emitting parts 213 from the floor surface F1, and that of the ceiling surface C1 from the floor surface F1 are almost equal, and the height is H.

$$W1 = \tan\alpha \times H \qquad (1)$$

Furthermore, a distance W2 from the intersection P1 between the normal line L1 and the floor surface F1 to an outer circumference of a light distribution area S of the light-emitting parts 213 on the floor surface F1 satisfies a relationship represented by the following Expression (2) with respect to the half angle β that is the angle formed between the optical axis L3 of each of the light-emitting parts 213 and the second straight line L4. It is assumed that the distance is W2, the height of the light-emitting parts 213 from the floor surface F1 is H, and that a distance (hereinafter, "center-to-center distance") between the center of the light-receiving surface of the pyroelectric sensor element of the human body sensor part 216 in the direction orthogonal to the optical axis of the light-emitting part 213 and the optical axis is W. In the Expression (2), W3 = tanβ x H corresponds to a distance from an intersection P3 between the optical axis L3 of the light-emitting part 213 and the floor surface F1 to the outer circumference of the light distribution area S of the light-emitting parts 213.

$$W2 = \tan\beta \times H + W = W3 + W \qquad (2)$$

In this case, to make the detection area D wider than the light distribution area S on the floor surface F1, it suffices to set the distance W1 from the intersection P1 between the normal line L1 and the floor surface F1 to the outer circumference of the detection area D of the human body sensor part 216 on the floor surface F1 to be larger than the distance W2 from the intersection P3 between the optical axis L3 of each light-emitting part 213 and the floor surface F1 to the outer circumference of the light distribution area S of the light-emitting parts 213. Therefore, to make the detection area D wider than the light distribution area S on the floor surface F1, it suffices to satisfy a relationship represented by the following Expression (3) with respect to the center-to-center distance W between each light-emitting part 213 and the human body sensor part 216.

$$W < H \times [\tan\alpha - \tan\beta]$$

Fig. 2 shows an example in which the illumination device 2 according to the present embodiment is attached to the attachment hole C2 provided in the ceiling material C. The illumination device 2 shown in Fig. 2 is attached to the attachment hole C2 in such a fashion as to fix the device main body 11 to the attachment frame 12 formed so that an outside diameter φ of the outer flange 12b is about 110 mm. The center-to-center distance W between each light-emitting part 213 and the human body sensor part 216 is set to 20 mm, and the height of the human body sensor part 216 from the floor surface F1 is set to be almost equal to the height H (2.2 m in the example shown in Fig. 2) of the ceiling surface C1 from the floor surface F1. That is, the human body sensor part 216 and the plurality of light-emitting parts 213 are arranged to be identical in the height from the floor surface F1. Further, the detection angle α is set to 45.5 degrees and the half angle β is set to 45 degrees. Accordingly, the distance W1 from the intersection P1 between the normal line L1 and the floor surface F1 to the outer circumference of the detection area D of the human body sensor part 216 on the floor surface F1 is 2.24 m. The distance W3 from the intersection P3 between the optical axis L3 of each light-emitting part 213 and the floor surface F1 to the outer circumference of the light distribution area S of the light-emitting part 213 on the floor surface F1 is 2.2m. Therefore, the distance W2 from the intersection P1 between the normal line L1 and the floor surface F1 to the outer circumference of the light distribution area S of the light-emitting part 213 is 2.22 m.

As shown in Fig. 6, there is no region in the light distribution area S which region overlaps with the detection area D of the human body sensor part 216 and the detection area D is wider than the light distribution area S. Therefore, the light-emitting parts 213 are not lighted off while a person is present in the light distribution area S and time since entry of the person in the light distribution area S until lighting-off of the light-emitting parts 213 can be reduced. In Fig. 6, hatched parts represent detection zones by the pyroelectric sensor element of the human body sensor part 216. The detection zones correspond to images of the light-receiving surface of the lens 216a of the human body sensor part 216 formed by the respective small lenses 216a2 constituting the lens 216a of the human body sensor part 216. In this case, the detection area D in the first embodiment corresponds to a region inside of a circle obtained by rotating a line connecting a point farthest from the intersection P1 in one detection zone located at a farthest position from the intersection P1 among the detection zones of the pyroelectric sensor element on the floor surface F1 to the intersection P1 around the intersection P1.

Moreover, there is no need to make a fine adjustment of the inclination of the pyroelectric sensor element of the human body sensor part 216 with respect to the floor surface F1 of the light-receiving surface so as not to generate the region overlapping with the detection area D in the light distribution area S, thereby advantageously ensuring high workability.

Furthermore, it suffices that the device main body 11 is structured to be able to support the circuit substrate 211 on which the human body sensor part 216 and the light-emitting part 213 are mounted. There is no need to provide a complicated structure for holding the human body sensor part 216 on the device main body 11. This can simplify a structure of the device main body 11 and suppress cost increase.

In the present embodiment, each light-emitting part 213 is constituted by LEDs smaller in heat value than a fluorescent lamp or the like. Due to this, although the light-emitting parts 213 are arranged to be proximate to the human body sensor part 216, the heat ray emitted from the light-emitting parts 213 has no influence on output of the human body detection signal from the human body sensor part 216 and malfunction of the human body sensor part 216 can be reduced.

In case of the illumination device 2 according to the present embodiment, the detection angle $\alpha$, the half angle $\beta$, the distance H from the floor surface F1 to the human body sensor part 216, and the center-to-center distance W between each light-emitting part 213 and the human body sensor part 216 satisfy the relationship represented by the Expression (3). This facilitates setting the center-to-center distance W between each light-emitting part 213 and the human body sensor part 216 and facilitates manufacturing accordingly.

Furthermore, in the illumination device 2 according to the present embodiment, the five light-emitting parts 213 are arranged to be equidistant, whereby the light distribution area S is almost symmetric to the normal line L1. It is, therefore, possible to set the same timing of lighting the light-emitting parts 213 irrespectively of an entry direction of a person in the light distribution area S.

Moreover, in the present embodiment, the human body sensor part 216 and the light-emitting parts 213 are mounted on one surface that is the same surface of one circuit substrate 211. Due to this, as compared with an instance in which the height of the human body sensor part 216 from the floor surface F1 differs from that of each light-emitting part 213 from the floor surface F1, the detection area D and the light distribution area S can be designed easily.

In the present embodiment, as shown in Fig. 1(b), the lens 216a is formed so that a side surface of the lens 216a constituting a part of the human body sensor part 216 has such a shape and a magnitude as not to intersect the side surface with the second straight line L4, and the lens 216a does not cut off the light emitted from the light-emitting parts 213 toward the light distribution area S. It is, therefore, possible to suppress unevenness of illumination intensity from occurring to the light distribution area S of the light-emitting parts 213 on the floor surface F1.

In the above-stated example, the center-to-center distance W between each light-emitting part 213 and the human body sensor part 216 in the present embodiment is set to 20 mm. However, as long as the center-to-center distance W is equal to or smaller than an upper limit of 38.7 mm, the center-to-center distance W can be appropriately set so as to satisfy the relationship represented by the Expression (3) while assuming that the detection angle is $\alpha$, the half angle is $\beta$, the height of the human body sensor part 216 from the floor surface F1, the height of each light-emitting part 213 from the floor surface F1, and the height of the ceiling surface C1 from the floor surface F1 are almost equal, and that the height is H.

(Second Embodiment)

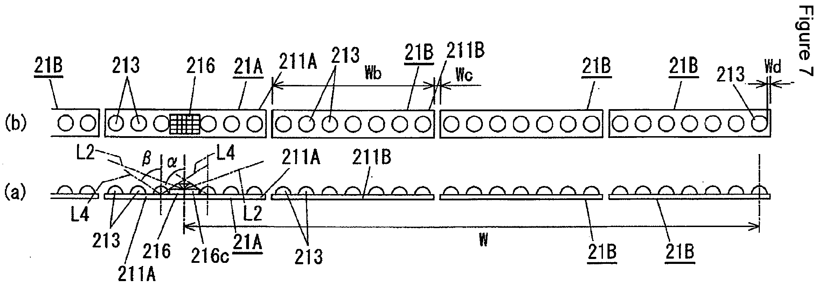

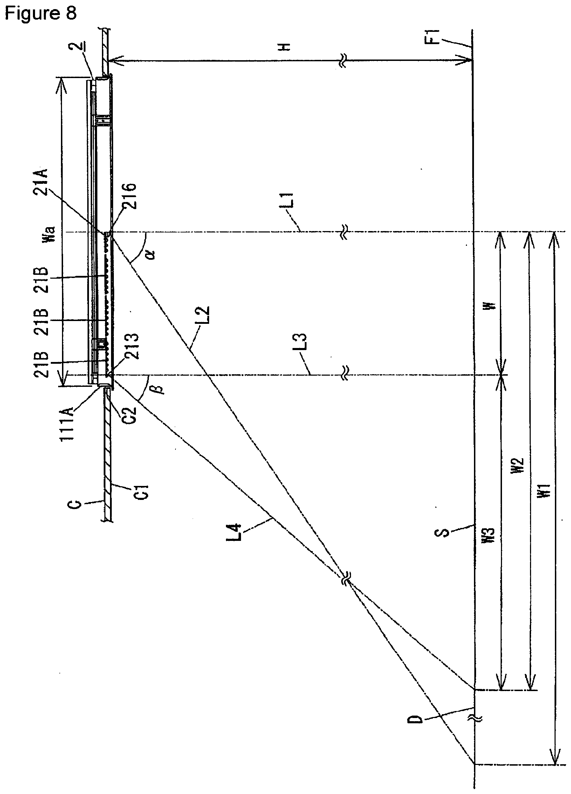

As shown in Fig. 7, the illumination device 2 according to the present embodiment is the illumination device 2 attached to the ceiling surface C1 of the ceiling material C of an office, a house or the like by attachment screws such as wooden screws (not shown). The illumination device 2 includes a longitudinal first LED unit 21A that includes the plurality of (six in an example shown in Fig. 7) light-emitting parts 213, a human body sensor part 216, and an illumination intensity part (not shown), and a plurality of second LED units 21B each of which including the plurality of light-emitting parts 213 and that is arranged by the same number (three in the example shown in Fig. 7) on both sides of a longitudinal direction of the first LED unit 21A along the longitudinal direction, respectively, and a control part (not shown) similar in circuit configuration to that according to the first embodiment. The control part drives the human body sensor part 216 and the illumination intensity sensor part of the first LED unit 21A. In addition, the control unit lights the LEDs included in light-emitting parts 213 of the first and second LED units 21A and 21B based on the human body detection signal outputted from the human body sensor part 216 and the output signal outputted from the illumination intensity sensor part. Further, as shown in Fig. 8, the first LED unit 21A and the second LED units 21B are accommodated in a longitudinal and rectangular box-like device main body 111A including an open window on a lower surface.

The first LED unit 21A includes a circuit substrate 211A formed into a longitudinal rectangular plate shape, the human body sensor part 216 provided almost in a central portion in the longitudinal direction on one surface of the circuit substrate 211A, and a plurality of light-emitting parts 213 arranged by the same number (three in the example shown) on the both sides of the human body sensor part 216 in the longitudinal direction on one surface of the circuit substrate 211A along the longitudinal direction, respectively.

The human body sensor part 216 includes the pyroelectric sensor element and a lens 216c that is formed out of polyethylene resin, arranged to cover up the pyroelectric sensor part, and that is rectangular in a plan view. It is to be noted that the human body sensor part 216 has an internal mirror structure reflecting a heat ray transmitted by the lens 216c. The illumination intensity sensor part is provided inside the lens 216c.

Each of the second LED units 21B includes the circuit substrate 211A formed into a longitudinal and rectangular plate shape, and a plurality of (seven in the example shown in Fig. 7) light-emitting parts 213 provided on one surface of the circuit substrate 211A along the longitudinal direction.

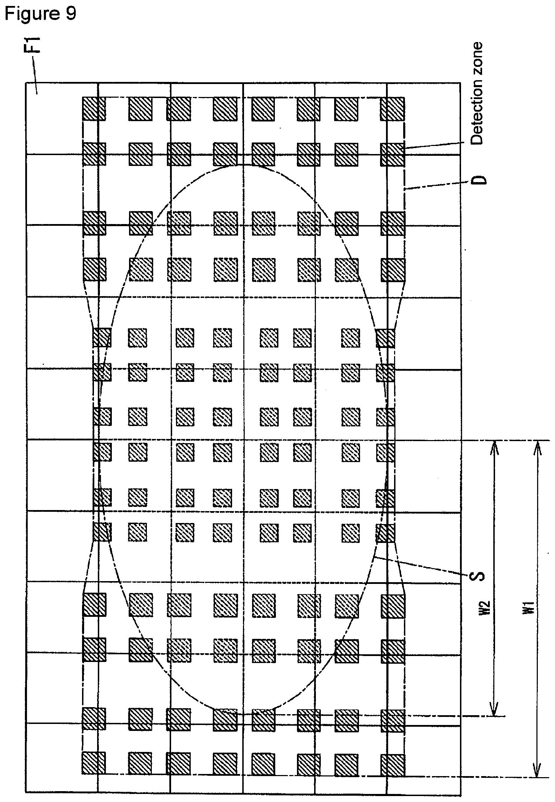

As shown in Fig. 8, in the illumination device 2 according to the present embodiment, a detection area D (see Fig. 9) of the human body sensor part 216 on the floor surface F1 is formed so as to include entirety of the light distribution area S on the floor surface F1 to which area light emitted from the plurality of light-emitting parts 213 and each having a radiation intensity that is equal to or higher than the maximum radiation intensity of light emitted from one light-emitting part 213 arranged at the farthest position from the human body sensor part 216 among a plurality of light-emitting parts 213, and so that the detection angle $\alpha$ that is the angle formed between the normal line L1 that is the normal of the plane passing through the center of the light receiving surface of the pyroelectric sensor element included in the human body sensor part 216 and including one surface of the circuit substrate 211A and the first straight line L2 connecting the center of the light-receiving surface of the pyroelectric sensor element of the human body sensor part 216 to the outer circumference of the detection area D is greater than the half angle $\beta$ that is the angle formed between the optical axis L3 of the light-emitting part 213 arranged at the farthest position from the human body sensor part 216 and the second straight line L4 extending in the radiation direction of the light emitted from the light-emitting part 213 and having the radiation intensity that is half the maximum radiation intensity.

The illumination device 2 according to the present embodiment includes the device main body 111A that has an open lower surface and an elongated rectangular parallelepiped shape, and is attached to the attachment hole C2 provided in the ceiling material C by the attachment screws (not shown). The human body sensor part 216 is arranged almost at the same height as the height H of the ceiling surface C1 from the floor surface F1. In this case, the distance W1 from the intersection P1 between the normal line L1 orthogonal to the ceiling surface C1 and passing through the center of the light-receiving surface of the pyroelectric sensor element of the human body sensor part 216 and the floor surface F1 to the outer circumference of the detection area D of the human body sensor part 216, and the distance W2 from the intersection P1 between the normal line L1 and the floor surface F1 to the outer circumference of the light distribution area S can be calculated from the Expressions (1) and (2), respectively described in the first embodiment.

In the illumination device 2 shown in Figs. 7 and 8, a length Wa of the device main body 111A in the longitudinal direction is set to 1245 mm. Further, the illumination device 2 is attached to the ceiling material C having the ceiling surface C1 the height H of which from the floor surface F1 is 2.2 m.

Moreover, each of the circuit substrates 211A and 211B is formed so that a length Wb in the longitudinal direction is 170 mm. In addition, the circuit substrates 211A and 211B are arranged so that each of a distance Wc between the two adjacent circuit substrates 211B and a distance between the circuit substrate 211A and each circuit substrate 211B is 10 mm. Moreover, in each of the circuit substrates 211A and 211B, a plurality of light-emitting parts 213 is provided so that a gap Wd generated between each of both longitudinal ends of the circuit substrate 211A and one light-emitting part 213 is 5 mm.

In the second LED unit 21B arranged at the farthest position from the first LED unit 21A among the plurality of second LED units 21B, the distance (hereinafter, "center-to-center distance") W between the center of the light-receiving surface of the pyroelectric sensor element of the human body sensor part 216 and the optical axis in the direction orthogonal to the optical axis of the light-emitting part 213 arranged at the farthest position from the human body sensor part 216 among a plurality of light-emitting parts 213 is set to 610 mm. In the example shown in Figs. 7 and 8, the detection angle $\alpha$ is set to 65 degrees and the half angle $\beta$ is set to 55 degrees.

Therefore, in the illumination device 2 shown in Fig. 8, the center-to-center distance W between the light-emitting part 213 and the human body sensor part 216 is 610 mm, the detection angle $\alpha$ is 65 degrees, the half angle $\beta$ is 55 degrees, and the height H of the ceiling surface C1 from the floor surface F1 is 2.2 m. Accordingly, the distance W1 from the intersection P1 between the normal line L1 and the floor surface F1 to the outer circumference of the detection area D of the human body sensor part 216 on the floor surface F1 is 4.72 m. In addition, the distance W3 from the intersection P3 between the optical axis L3 of the light-emitting part 213 and the floor surface F1 to the outer circumference of the light distribution area S of the light-emitting part 213 on the floor surface F1 is 3.14 m. Therefore, the distance W2 from the intersection P1 between the normal line L1 and the floor surface F1 to the outer circumference of the light distribution area S of the light-emitting part 213 on the floor surface F1 is 3.75 m.

As shown in Fig. 9, there is no region overlapping with the detection area D of the human body sensor part 216 in the light distribution area S, and the detection area D is wider than the light distribution area S. Therefore, the light-emitting parts 213 are not lighted off while a person is present in the light distribution area S and it is possible to secure the appropriate detection area D for which time since entry of the person in the light distribution area S until lighting-off of the light-emitting parts 213 is short. In Fig. 9, hatched parts represent detection zones by the pyroelectric sensor element of the human body sensor part 216. In this case, the detection area D in the second embodiment corresponds to a region that is a combination of a plurality of detection zones and regions between the adjacent detection zones in an assembly constituted by the detection zones formed on the floor surface F1.

In the present embodiment, as shown in Fig. 7(b), the lens 216c constituting a part of the human body sensor part 216 is formed so as to have such a shape and a magnitude as not to intersect the side surface with the second straight line L4, and the lens 216c does not cut off the light emitted from each light-emitting parts 213 adjacent to the human body sensor part 216 toward the light distribution area S of the light-emitting part 213. It is, therefore, possible to suppress unevenness of illumination intensity from occurring to the light distribution area S of the light-emitting parts 213 on the floor surface F1.

In the above-stated example, the center-to-center distance W between each light-emitting part 213 and the human body sensor part 216 in the present embodiment is set to 610 mm. However, as long as the center-to-center distance W is equal to or smaller than an upper limit of 1575 mm, the center-to-center distance W can be appropriately set so as to satisfy the relationship represented by the Expression (3) while assuming that the detection angle is $\alpha$, the half angle is $\beta$, the height of the human body sensor part 216 from the floor surface F1, the height of each light-emitting part 213 from the floor surface F1, and the height of the ceiling surface C1 from the floor surface F1 are almost equal, and that the height is H.

Furthermore, the illumination device 2 has been described in the second embodiment while referring to the example in which the illumination device 2 includes the plurality of second LED units 21B each including only the light-emitting parts 213. However, the illumination device 2 according to the second embodiment is not limited to this example. For example, the illumination device 2 according to the second embodiment may be configured to arrange one LED unit (not shown) including the human body sensor part 216 and a plurality of light-emitting parts 213.

(Third Embodiment)

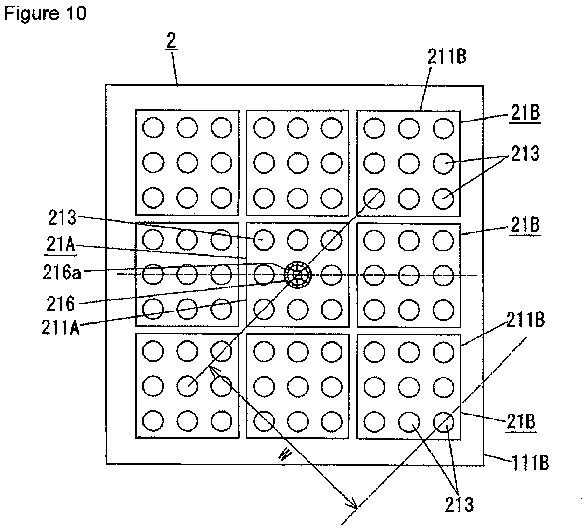

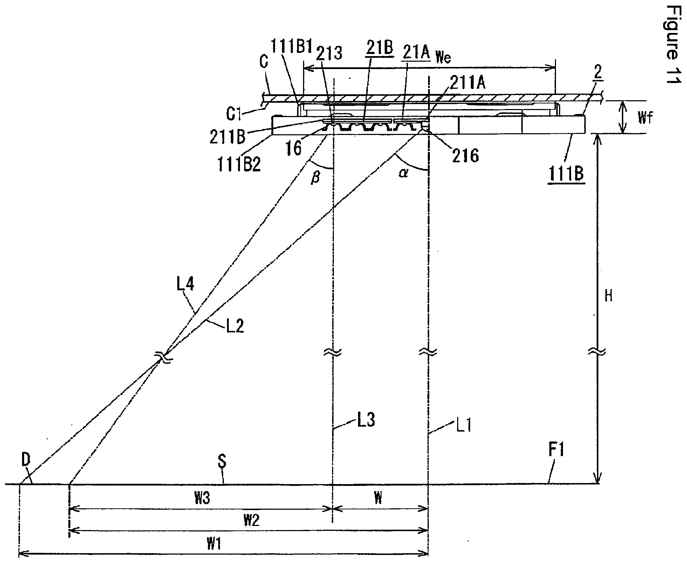

As shown in Figs. 10 and 11, the illumination device 2 according to the present embodiment is the illumination device 2 attached to the ceiling surface C1 of the ceiling material C of an office, a house or the like by attachment screws such as wooden screws (not shown). The illumination device 2 includes a first LED unit 21A that includes the plurality of (eight in an example shown in Fig. 10) light-emitting parts 213 and one human body sensor part 216 and that is square in a plan view, eight second LED units 21B each of which includes a plurality of (nine in the example shown in Fig. 10) light-emitting parts 213, that are arranged to surround the first LED unit 21A, and that are square in a plan view, a device main body 111B formed to be square in a plan view, including an opening on a lower surface, and accommodating therein the first LED unit 21A and the second LED units 21B, a rectangular plate-like cover (not shown) attached to the device main body 111B to cover up the opening on the lower surface of the device main body 111B and made of a translucent material, and the control part (not shown) similar in a circuit configuration to that according to the first embodiment. The control part drives the human body sensor part 216 and the illumination intensity sensor part (not shown) of the first LED unit 21A. In addition, the control unit lights the LEDs included in light-emitting parts 213 of the first and second LED units 21A and 21B based on the human body detection signal outputted from the human body sensor part 216 and the output signal outputted from the illumination intensity sensor part. A plurality of reflector members 16 (see Fig. 11) is provided to surround the respective light-emitting parts 213 between the cover inside of the device main body 111B and a circuit substrate 211A, to be described later, constituting a part of the first LED unit 21A and a circuit substrate 211B, to be described later, constituting a part of the second LED units 21B, and to reflect light emitted from the respective light-emitting parts 213. As shown in Fig. 11, the device main body 111B of the illumination device 2 according to the present embodiment is configured to include a first accommodation chamber 111B1 formed into a square shape having each side at a length We in a plan view and accommodating therein the control part, and a second accommodation chamber 111B2 formed into a square shape having each longer side than that of the first accommodation chamber 111B1 in a plan view, provided continuously to and integrally with the first accommodation chamber 111B1 below the accommodation chamber 111B1, and accommodating therein the first LED unit 21A and the second LED units 21B.

The first LED unit 21A includes the circuit substrate 211A formed into a square plate shape in a plan view, the human body sensor part 216 provided almost in the central portion in the longitudinal direction on one surface of the circuit substrate 211A, and a plurality of (eight in the example shown) light-emitting parts 213 arranged around the human body sensor part 216 on one surface of the circuit substrate 211A.

The human body sensor part 216 includes the pyroelectric sensor element (not shown) and the lens 216a formed to be circular in a plan view and provided to cover up the pyroelectric sensor element similarly to the human body sensor part 216 described in the first embodiment.

Each of the second LED units 21B includes the circuit substrate 211B formed into a square plate shape in a plan view, and a plurality of (nine in the example shown in Fig. 10) light-emitting parts 213 provided equidistantly on one surface of the circuit substrate 211B.

As shown in Fig. 11, in the illumination device 2 according to the present embodiment, the detection area D of the human body sensor part 216 on the floor surface F1 is formed so as to include entirety of the light distribution area

S on the floor surface F1 to which area light emitted from the plurality of light-emitting parts 213 and each having a radiation intensity that is equal to or higher than the maximum radiation intensity of light emitted from one light-emitting part 213 arranged at the farthest position from the human body sensor part 216 among a plurality of light-emitting parts 213, and so that the detection angle $\alpha$ that is the angle formed between the normal line L1 that is the normal of the plane passing through the center of the light receiving surface of the pyroelectric sensor element included in the human body sensor part 216 and including one surface of the circuit substrate 211A and the first straight line L2 connecting the center of the light-receiving surface of the pyroelectric sensor element of the human body sensor part 216 to the outer circumference of the detection area D is greater than the half angle $\beta$ that is the angle formed between the optical axis L3 of the light-emitting part 213 arranged at the farthest position from the human body sensor part 216 and the second straight line L4 extending in the radiation direction of the light emitted from the light-emitting part 213 and having the radiation intensity that is half the maximum radiation intensity. In addition, the illumination device 2 according to the present embodiment includes the reflector members 16 around the light-emitting parts 213 and the cover provided below the light-emitting parts 213. Due to this, the half angle $\beta$ is set to the angle considering the influence of reflection of the light emitted from the light-emitting parts 213 by the reflector members 16 and that of transmission of the light by the cover. While the illumination device 2 configured as shown in Fig. 11 includes the reflector members 16 and the cover, the illumination device 2 does not necessarily include the reflector members 16 and the cover.

The illumination device 2 according to the present embodiment includes the device main body 111B, and is attached to the ceiling surface C1 of the ceiling material C. The human body sensor part 216 is arranged almost at the same height as the height H of the ceiling surface C1 from the floor surface F1. In this case, the distance from the intersection P1 between the normal line L1, which is orthogonal to the ceiling surface C1 and which passes through the center of the light-receiving surface of the pyroelectric sensor element of the human body sensor part 216, and the floor surface F1 to the outer circumference of the detection area D formed on the floor surface F1 by the human body sensor part 216, and the distance from the intersection P1 between the normal line L1 and the floor surface F1 to the outer circumference of the light distribution area S formed on the floor surface F1 by each light-emitting part 213 can be calculated from the Expressions (1) and (2), respectively described in the first embodiment.

In the illumination device 2 shown in Fig. 11, a length We of one side of the first accommodation chamber 111B1 of the device main body 111B is set to 500 mm. Further, the illumination device 2 is attached to the ceiling material C having the ceiling surface C1 the height H of which from the floor surface F1 is 2.2 m. In the illumination device 2 shown in Fig. 11, a distance Wf between the ceiling surface C1 and a lower surface of the illumination device 2 is set to be 0.1 m.

In the example shown in Fig. 10, the length of one end of the circuit substrates 211A and 211B is set to 100 mm. In the second LED unit 21B arranged in a diagonal direction to the first LED unit 21A that is square in the plan view among the eight second LED units 21B, the distance (hereinafter, "center-to-center distance") W between the center of the light-receiving surface of the pyroelectric sensor element of the human body sensor part 216 and the optical axis in the direction orthogonal to the optical axis of the light-emitting part 213 arranged at the farthest position from the human body sensor part 216 among a plurality of light-emitting parts 213 is set to 250 mm. Further, the detection angle $\alpha$ is set to 45.5 degrees and the half angle $\beta$ is set to 40 degrees.

In the illumination device 2 shown in Fig. 11, the center-to-center distance W between the light-emitting part 213 and the human body sensor part 216 is 250 mm, the detection angle $\alpha$ is 45.5 degrees, the half angle $\beta$ is 40 degrees, and the height H of the ceiling surface C1 from the floor surface F1 is 2.2 m. Accordingly, the distance W1 from the intersection P1 between the normal line L1 and the floor surface F1 to the outer circumference of the detection area D of the human body sensor part 216 on the floor surface F1 is 2.24 m. In addition, the distance from the intersection P3 between the optical axis L3 of the light-emitting part 213 and the floor surface F1 to the outer circumference of the light distribution area S of the light-emitting part 213 arranged at the farthest position from the human body sensor part 216 is 1.85 m. Therefore, the distance W2 from the intersection P1 between the normal line L1 and the floor surface F1 to the outer circumference of the light distribution area S of the light-emitting part 213 arranged at the farthest position from the human body sensor part 216 is 2.10 m.

In this way, there is no region overlapping with the detection area D of the human body sensor part 216 in the light distribution area S of the light-emitting part 213 arranged at the farthest position from the human body sensor part 216, and the detection area D is wider than the light distribution area S. Therefore, the light-emitting parts 213 are not lighted off while a person is present in the light distribution area S and it is possible to secure the appropriate detection area D for which time since entry of the person in the light distribution area S until lighting of the light-emitting parts 213 is short.

In the above-stated example, the center-to-center distance W between each light-emitting part 213 and the human body sensor part 216 in the present embodiment is set to 250 mm. However, as long as the center-to-center distance W is equal to or smaller than an upper limit of 390 mm, the center-to-center distance W can be appropriately set so as to satisfy the relationship represented by the Expression (3) while assuming that the detection angle is $\alpha$, the half angle is $\beta$, and the height of the human body sensor part 216 from the floor surface F1, the height of each light-emitting part 213 from the floor surface F1, and the height of the ceiling surface C1 from the floor surface F1 are almost equal.

Furthermore, the illumination device 2 has been described in the third embodiment while referring to the example in which the illumination device 2 includes the plurality of second LED units 21B each including only the light-emitting parts 213. However, the illumination device 2 according to the second embodiment is not limited to this example. For example, the illumination device 2 according to the second embodiment may be configured to arrange one LED unit (not shown) including the human body sensor part 216 and the plurality of light-emitting parts 213.

In the embodiments stated above, the example in which each light-emitting part 213 includes solid-state light-emitting elements constituted by LEDs has been described. However, the present invention is not limited to this example. For example, each light-emitting part 213 may include solid-state light-emitting elements constituted by organic EL elements.

[Description of Reference Numerals]

| | |
|---|---|
| 2 : | Illumination device |
| 11, 111A, 111B : | Device main body |
| 22 : | Control part |
| 211, 211A, 211B : | Circuit substrate |
| 213 : | Light-emitting part |
| 216 : | Human body sensor part |
| $\alpha$ : | Detection angle |
| $\beta$ : | Half angle |
| D : | Detection area |
| S : | Light distribution area |
| F1 : | Floor surface |
| L1 : | Normal |
| L2 : | First straight line |
| L3 : | Optical axis |
| L4 : | Second straight line |

**Claims**

1.   An illumination device (2) comprising:

a human body sensor part (216) outputting a human body detection signal if a sensor element detecting a heat ray emitted from a human body detects a change of the heat ray;
a plurality of light-emitting parts (213) each including a plurality of solid-state light-emitting elements;
a control part (22) lighting the solid-state light-emitting elements of all the light-emitting parts (213) based on the human body detection signal outputted from the human body sensor part (216);
a circuit substrate (211, 211A, 211B), the human body sensor part (216) and the light-emitting parts (213) being mounted on the circuit substrate (211, 211A, 211B); and
a device main body (11, 111A, 111B) supporting the circuit substrate (211, 211A, 211B) so as to be able to make the heat ray incident on the human body sensor part mounted on the circuit substrate (211, 211A, 211B) and to be able to emit light emitted from the light-emitting parts (213), wherein:

a detection angle ($\alpha$) is set to be greater than a half angle ($\beta$) so that a detection area (D) of the human body sensor part (216) on a floor surface includes entirety of a light distribution area (S) on a floor surface, the detection angle ($\alpha$) being an angle formed between a normal (L1) of a plane passing through a center of a light-receiving surface of the sensor element of the human body sensor part (216) and including one surface of the circuit substrate (211, 211A, 211B) and a first straight line (L2) connecting the center of the light-receiving surface of the sensor element of the human body sensor part (216) to an outer circumference of the detection area (D) on the floor surface, the half angle ($\beta$) being an angle formed between an optical axis (L3) of each of the light-emitting parts (213) and a second straight line (L4) extending in a radiation direction of light emitted from each of the light-emitting parts (213) and having a radiation intensity as half as a maximum value of the radiation intensity and indicating a directivity characteristic of each of the light-emitting parts (213), light being distributed to the light distribution area (S) on the floor surface, the light distributed to the light distribution area (S) on the floor surface being emitted from each of the light-emitting parts (213) and having a radiation intensity equal to or higher than half of a maximum value of the radiation intensity,

wherein the human body sensor part (216) includes a lens (216a) constituted by an assembly of many small lenses (216a2), wherein detection zones inside the detection area (D) correspond to images of the light-receiving surface of the respective small lenses (216a2) constituting the lens (216a) of the human body sensor part (216), and wherein the lens (216a) has such a shape and size that it does not cut off the light emitted from the light-emitting parts (213) toward the light distribution area (S).

2. The illumination device according to claim 1, wherein:
the lens (216a) is formed so that a side surface of the lens (216a) constituting a part of the human body sensor part (216) has such a shape and a magnitude as not to intersect the side surface with the second straight line (L4).

3. The illumination device according to claim 1, wherein:

the human body sensor part (216) and the plurality of light-emitting parts (213) are arranged to be identical in a height (H) from the floor surface, and

the human body sensor part (216) and the plurality of light-emitting parts (213) are arranged so as to satisfy a relational expression of $W < H \times [\tan\alpha - \tan\beta]$ for a center-to-center distance, the center-to-center distance being W, the height of the human body sensor part from the floor surface being H, the detection angle being $\alpha$, and the half angle being $\beta$, the center-to-center distance being a distance between a center of the light-receiving surface of the sensor element of the human body sensor part (216) and the optical axis (L3) in a direction orthogonal to the optical axis (L3) of one of the light-emitting parts (213) arranged at a farthest position from the human body sensor part (216) .

4. The illumination device according to one of claim 1-3, wherein:
the plurality of light-emitting parts (213) are arranged to surround a periphery of the human body sensor part (216).

5. The illumination device according to one of claim 1-4, wherein:
light-emitting part (213) is constituted by solid-state light-emitting elements smaller in heat value than a fluorescent lamp.

**Patentansprüche**

1. Beleuchtungsvorrichtung (2) aufweisend:

einen Menschenkörper-Sensorteil (216), das ein Menschenkörper-Detektionssignal ausgibt, wenn ein Sensorelement, das eine von einem menschlichen Körper emittierte Wärmestrahlung detektiert, eine Änderung der Wärmestrahlung detektiert;
eine Mehrzahl von lichtemittierenden Teilen (213), von denen jedes eine Mehrzahl von Festkörperlichtemissionselementen aufweist;
einen Steuerteil (22), der die Festkörperlichtemissionselemente von allen lichtemittierenden Teilen (213) zum Leuchten bringt, basierend auf dem Menschenkörper-Detektionssignal, das von dem Menschenkörper-Sensorteil (216) ausgegeben wird;
einen Schaltungsträger (211, 211A, 211B), wobei der Menschenkörper-Sensorteil (216) und die lichtemittierenden Teile (213) auf dem Schaltungsträger (211, 211A, 211B) angebracht sind; und
einen Vorrichtungshauptkörper (11, 111A, 111B), der den Schaltungsträger (211, 211A, 211B) trägt, um zu ermöglichen, dass die Wärmestrahlung auf den Menschenkörper-Sensorteil einfällt, der auf dem Schaltungsträger (211, 211A, 211B) angebracht ist, und um Licht zu emittieren, das von den lichtemittierenden Teilen (213) emittiert wird, wobei:

ein Detektionswinkel ($\alpha$) größer vorgegeben wird als ein Halbwinkel ($\beta$), so dass ein Detektionsbereich (D) des Menschenkörper-Sensorteils (216) an einer Bodenoberfläche die Gesamtheit eines Lichtverteilungsbereichs (S) an der Bodenoberfläche umfasst, wobei der Detektionswinkel ($\alpha$) ein Winkel ist, der zwischen einer Normalen (L1) einer Ebene, die durch ein Zentrum der lichtempfangenen Fläche des Sensorelements des Menschenkörper-Sensorteils (216) hindurchgeht und eine Oberfläche des Schaltungsträgers (211, 211A, 211B) enthält, und einer ersten geraden Linie (L2), die das Zentrum der lichtempfangenen Fläche des Sensorelements des Menschenkörper-Sensorteils (216) mit einer äußeren Umrandung des Detektionsbereichs (D) an der Bodenoberfläche verbindet, gebildet ist, wobei der Halbwinkel (β) ein Winkel ist, der zwischen einer optischen Achse (L3) von jedem der lichtemittierenden Teile (213) und einer zweiten geraden Linie (L4) gebildet ist, die sich in einer Abstrahlrichtung von Licht erstreckt, dass von jedem von den lichtemittierenden Teilen (213) emittiert wird und eine Abstrahlintensität von der Hälfte von einem Maximalwert der Abstrahlintensität hat und eine Richtcharakteristik von jedem der lichtemittierenden Teile (213) angibt, wobei Licht zum Lichtverteilungsbereich (S) an der Bodenoberfläche verteilt wird, wobei das zum Lichtverteilungsbereich (S) auf der Bodenoberfläche verteilte Licht von jedem der lichtemittierenden Teile (213) emittiert wird und eine Abstrahlintensität aufweist, die gleich ist wie oder größer ist als die Hälfte eines Maximalwertes der Abstrahlintensität,

wobei der Menschenkörper-Sensorteil (216) eine Linse (216a) aufweist, die durch eine Anordnung von vielen kleinen Linsen (216a2) gebildet ist, wobei die Detektionszonen innerhalb des Detektionsbereichs (D) mit Bildern der lichtempfangenen Fläche der jeweiligen kleinen Linsen (216a2) übereinstimmen, die die Linse (216a) des Menschenkörper-Sensorteils (216) bilden, und wobei die Linse (216a) eine solche Gestalt und Größe hat, dass sie Licht, das von den lichtemittierenden Teilen (213) zu dem Lichtverteilungsbereich (S) emittiert wird, nicht abschirmen.

2.  Beleuchtungsvorrichtung nach Anspruch 1, wobei:

die Linse (216a) geformt ist, so dass eine Seitenoberfläche der Linse (216a), die einen Teil des Menschenkörper-Sensorteils (216) bildet, eine solche Gestalt und eine Größe hat, dass sich die Seitenfläche nicht mit der zweiten geraden Linie (L4) schneidet.

3.  Beleuchtungsvorrichtung nach Anspruch 1, wobei:

der Menschenkörper-Sensorteil (216) und die Mehrzahl von lichtemittierenden Teilen (213) angeordnet sind, so dass sie eine gleiche Höhe (H) von der Bodenoberfläche haben und
der Menschenkörper-Sensorteil (216) und die Mehrzahl von lichtemittierenden Teilen (213) angeordnet sind, so dass sie einen relationalen Ausdruck W < H x [tanα-tanβ] für eine Distanz von Zentrum zu Zentrum erfüllen, wobei die Distanz von Zentrum zu Zentrum W ist, die Höhe des Menschenkörper-Sensorteils von der Bodenoberfläche H ist, der Detektionswinkel α ist und der Halbwinkel β ist, wobei die Distanz von Zentrum zu Zentrum eine Distanz zwischen einem Zentrum der lichtempfangenen Oberfläche des Sensorelements des Menschenkörper-Sensorteils (216) und der optischen Achse (L3) in einer Richtung rechtwinklig zu der optischen Achse (L3) von einem der lichtemittierenden Teile (213) ist, das an einer entferntesten Position von dem Menschenkörper-Sensorteil (216) angeordnet ist.

4.  Beleuchtungsvorrichtung nach einem der Ansprüche 1-3, wobei:
die Mehrzahl von lichtemittierenden Teilen (213) angeordnet sind, um einen Umfang des Menschenkörper-Sensorteils (216) zu umschließen.

5.  Beleuchtungsvorrichtung nach einem der Ansprüche 1-4, wobei:
der lichtemittierende Teil (213) durch Festkörper-Lichtemissionselemente gebildet ist, die einen kleineren Heizwert aufweisen als eine Leuchtstofflampe.

**Revendications**

1.  Dispositif d'éclairage (2) comprenant :

une partie capteur de corps humain (216) émettant un signal de détection de corps humain si un élément capteur détectant un rayon thermique émis depuis un corps humain détecte un changement du rayon thermique ;
une pluralité de parties émettrices de lumière (213) comprenant chacune une pluralité d'éléments émetteurs de lumière à semiconducteurs ;
une partie de commande (22) éclairant les éléments émetteurs de lumière à semiconducteurs de toutes les parties émettrices de lumière (213) en fonction du signal de détection de corps humain émis depuis la partie capteur de corps humain (216) ;
un substrat de circuit (211, 211A, 211B), la partie capteur de corps humain (216) et les parties émettrices de lumière (213) étant montées sur le substrat de circuit (211, 211A, 211B) ; et

un corps principal de dispositif (11, 111A, 111B) supportant le substrat de circuit (211, 211A, 211B) de manière à pouvoir rendre le rayon thermique incident sur la partie capteur de corps humain montée sur le substrat de circuit (211, 211A, 211B) et à pouvoir émettre de la lumière émise depuis les parties émettrices de lumière (213), où :

un angle de détection ($\alpha$) est fixé pour être supérieur à un demi-angle ($\beta$) de sorte qu'une région de détection (D) de la partie capteur de corps humain (216) sur une surface du sol comprend la totalité d'une région de distribution de lumière (S) sur une surface du sol, l'angle de détection ($\alpha$) étant un angle formé entre une verticale (L1) d'un plan passant à travers un centre d'une surface de réception de lumière de l'élément capteur de la partie capteur de corps humain (216) et comprenant une surface du substrat de circuit (211, 211A, 211B) et une première ligne droite (L2) reliant le centre de la surface de réception de lumière de l'élément capteur de la partie capteur de corps humain (216) à une circonférence extérieure de la région de détection (D) sur la surface du sol, le demi-angle ($\beta$) étant un angle formé entre un axe optique (L3) de chacune des parties émettrices de lumière (213) et une seconde ligne droite (L4) s'étendant dans une direction de rayonnement de lumière émise depuis chacune des parties émettrices de lumière (213) et ayant une intensité de rayonnement de la moitié d'une valeur maximum de l'intensité de rayonnement et indiquant une caractéristique de directivité de chacune des parties émettrices de lumière (213), la lumière étant distribuée vers la région de distribution de lumière (S) sur la surface du sol, la lumière distribuée vers la région de distribution de lumière (S) sur la surface du sol étant émise depuis chacune des parties émettrices de lumière (213) et ayant une intensité de rayonnement supérieure ou égale à la moitié d'une valeur maximum de l'intensité de rayonnement, où la partie capteur de corps humain (216) comprend une lentille (216a) constituée par un ensemble de nombreuses petites lentilles (216a2), où des zones de détection à l'intérieur de la région de détection (D) correspondent à des images de la surface de réception de lumière des petites lentilles respectives (216a2) constituant la lentille (216a) de la partie capteur de corps humain (216), et où la lentille (216a) a une forme et une taille telles qu'elle n'interrompt pas la lumière émise depuis les parties émettrices de lumière (213) en direction de la région de distribution de lumière (S).

2. Dispositif d'éclairage selon la revendication 1, dans lequel :
la lentille (216a) est formée de sorte qu'une surface latérale de la lentille (216a) constituant une partie de la partie capteur de corps humain (216) a une forme et une magnitude propres à ne pas croiser la surface latérale avec la seconde ligne droite (L4).

3. Dispositif d'éclairage selon la revendication 1, dans lequel :

la partie capteur de corps humain (216) et la pluralité de parties émettrices de lumière (213) sont disposées de manière à être identiques en hauteur (H) à partir de la surface du sol, et
la partie capteur de corps humain (216) et la pluralité de parties émettrices de lumière (213) sont disposées de manière à satisfaire une expression relationnelle de W < H x [tan$\alpha$ -tan$\beta$] pour une distance de centre à centre, la distance de centre à centre étant W, la hauteur de la partie capteur de corps humain depuis la surface du sol étant H, l'angle de détection étant $\alpha$, et le demi-angle étant $\beta$, la distance de centre à centre étant une distance entre un centre de la surface de réception de lumière de l'élément capteur de la partie capteur de corps humain (216) et l'axe optique (L3) dans une direction orthogonale à l'axe optique (L3) d'une des parties émettrices de lumière (213) disposées au niveau d'une position la plus éloignée de la partie capteur de corps humain (216).

4. Dispositif d'éclairage selon l'une des revendications 1 à 3, dans lequel :
la pluralité de parties émettrices de lumière (213) sont disposées de manière à entourer une périphérie de la partie capteur de corps humain (216).

5. Dispositif d'éclairage selon l'une des revendications 1 à 4, dans lequel :
la partie émettrice de lumière (213) est constituée par des éléments émetteurs de lumière à semiconducteurs ayant une valeur thermique inférieure à une lampe fluorescente.

## Figure 1

(a)

(b)

| 211 Circuit substrate | L1 Normal |
|---|---|
| 213 Light emitting part | L2 First straight line |
| 216 Human body sensor part | L3 Optical axis |
| α Detection angle | L4 Second straight line |
| β Half angle | |

Figure 2

EP 2 268 106 B1

Figure 3

20

Figure 4

## Figure 5

Lighting start illumination intensity set value

Vs

0

Output signal

Detection

Non-detection

Human body detection signal

Lighting

Lighting-off

Outputted from light-emitting parts

T1

a  b  c  d

Figure 6

Figure 7

Figure 8

Figure 9

F1

Detection zone

D

W2

W1

S

Figure 10

Figure 11

Figure 12

Figure 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030117803 A1
- US 20060181416 A1
- JP 20052335398 B
- JP 2002157916 A